(19) Europäisches Patentamt European Patent Office Office européen des brevets

(11) **EP 3 342 836 B1**

(12) **EUROPEAN PATENT SPECIFICATION**

(45) Date of publication and mention of the grant of the patent:
**18.05.2022 Bulletin 2022/20**

(21) Application number: **15902244.1**

(22) Date of filing: **25.08.2015**

(51) International Patent Classification (IPC):
*C09J 7/20* (2018.01)    *C09J 7/24* (2018.01)
*C09J 7/26* (2018.01)    *C09J 201/00* (2006.01)

(52) Cooperative Patent Classification (CPC):
(C-Sets available)
**C09J 7/20; C09J 7/243; C09J 7/26;**
C09J 2203/318; C09J 2301/124; C09J 2301/414;
C09J 2423/046; C09J 2431/006          (Cont.)

(86) International application number:
**PCT/JP2015/073808**

(87) International publication number:
**WO 2017/033274 (02.03.2017 Gazette 2017/09)**

(54) **PRESSURE-SENSITIVE ADHESIVE TAPE**

DRUCKEMPFINDLICHES KLEBEBAND

RUBAN ADHÉSIF SENSIBLE À LA PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.07.2018 Bulletin 2018/27**

(73) Proprietor: **Teraoka Seisakusho Co., Ltd.**
**Tokyo 140-8711 (JP)**

(72) Inventors:
• **TSUCHIYA, Yasushi**
  **Tokyo 140-8711 (JP)**
• **NIWA, Masashi**
  **Tokyo 140-8711 (JP)**

(74) Representative: **Hering, Hartmut**
**Patentanwälte**
**Berendt, Leyh & Hering**
**Innere Wiener Strasse 20**
**81667 München (DE)**

(56) References cited:
WO-A1-2013/011770    WO-A1-2015/046526
JP-A- S5 941 338      JP-A- S5 991 178
JP-A- S5 991 179      JP-A- 2010 150 498
JP-A- 2010 260 880    JP-A- 2010 260 880
JP-A- 2012 167 247    JP-A- 2012 167 247
JP-A- 2015 093 981    US-A1- 2015 086 767

(52) Cooperative Patent Classification (CPC): (Cont.)

C-Sets
C09J 2423/046

**Description**

Technical Field

The present invention relates to an adhesive tape excellent in various properties such as impact resistance, an antistatic property, shear deformation rate during heating, pressing force and the like and which can be suitably used in applications of electronic devices such as, for example, smartphones, tablet terminals and the like.

Background Art

Portable electronic devices such as smartphones, tablet terminals and the like generally have a structure in which a touch panel, a module and a body housing a liquid crystal module are combined. For example, an adhesive tape is used for fixing a touch panel, a module and a body.

In recent years, thinning and downsizing of these electronic devices are progressing. For this reason, for example, FPC (Flexible Printed Circuit) is bent at a more acute angle in a device, to give an inner structure always receiving strong repulsion force. Further, narrowing of a frame (square frame) surrounding a liquid crystal panel for enlarging the display region of a liquid crystal display (LCD) is progressing. Accordingly, it is necessary to also narrow an adhesive tape fixing a top panel to a body. For enduring repulsion force by FPC and the like from the inside and impact from the outside, not only adhesion strength of an adhesive layer but also strength of a base is necessary.

When the strength of a base of a narrow adhesive tape is insufficient, the adhesive tape deforms along the thickness direction, and interlaminar fracture occurs due to internal stress and external stress, leading to breakage of a device. Further, when pasting to a body, dimension stability is poor, causing twist.

As the base of this type of adhesive tape, a polyolefin based foam composed of polyethylene as the main component is generally used. For example, Patent Document 1 describes a double-faced adhesive tape in which an acrylic adhesive layer is provided on both sides of a foam base. As specific examples of this foam base, polyolefin based resin foams such as a polyethylene foam, a polypropylene foam and the like are described. The thickness of this foam base is 50 to 150 $\mu$m, and the 30% compression load thereof is 5 to 200 kPa.

Patent Document 2 describes a waterproof double-faced adhesive tape composed of a polyolefin based foam base and an adhesive layer, intending fixing of parts of a portable electronic device. The thickness of this polyolefin based foam base is 70 to 300 $\mu$m, the 25% compression strength thereof is 40 to 160 kPa, the tensile strength thereof is 300 to 1500 N/cm$^2$, the average bubble diameter in the thickness direction thereof is 1 to 100 $\mu$m, and the average bubble diameter in the flow direction and in the width direction thereof is 1.2 to 700 $\mu$m.

Patent Document 3 describes an adhesive tape in which an adhesive layer is provided on at least one side of a foam base. As specific examples of the foam base, polyolefin based foam bases such as a polyethylene foam base, a polypropylene foam base and the like are described. The thickness of this foam base is 300 $\mu$m or less, the interlaminar strength thereof is 6 to 50 N/cm, the 25% compression strength thereof is 30 kPa or more, the tensile strength thereof is 300 N/cm$^2$ or more, the average bubble diameter in the thickness direction thereof is 10 to 100 $\mu$m, and the average bubble diameter in the flow direction and in the width direction thereof is 10 to 700 $\mu$m.

Patent Document 4 describes a crosslinked polyolefin based resin foamed sheet having high shock absorbability and an antistatic property. The foaming magnification of this foamed sheet is 1.1 to 2.8 cm$^3$/g, the average bubble diameter in MD thereof is 150 to 250 $\mu$m, the average bubble diameter in CD thereof is 120 to 300 $\mu$m, the thickness thereof is 0.02 to 1.9 mm, and the 25% compression strength thereof is 250 to 1500 kPa.

However, Patent Documents 1 to 4 do not sufficiently investigate an antistatic property which is particularly important when an adhesive tape is used in an electronic device. Further, according to the knowledge of the present inventors, the conventional physical property evaluation methods described in Patent Documents 1 to 4 cannot sufficiently evaluate whether its base is suitable for a narrow width adhesive tape. For example, "compression strength" or "compression load" described in Patent Documents 1 to 4 is only an index for hardness in the thickness direction. "Tensile strength" or "interlaminar strength" described in Patent Documents 2 and 3 is only strength when the base is broken. "Average bubble diameter" or "foaming magnification" described in Patent Documents 3 and 4 is only an index showing the extent of foaming. That is, the conventional physical property evaluation methods described in Patent Documents 1 to 4 are not necessarily suitable for application as they are particularly to an ultra narrow adhesive tape, and cannot evaluate various properties such as narrow square frame low temperature impact resistance, narrow square frame anti-moisture heat load, further, an antistatic property, shear deformation rate during heating, pressing force, processability and the like which are particularly important for an ultra narrow adhesive tape.

Related Art Documents

Patent Documents

[Patent Document 1] JP-A No. 2015-63703
[Patent Document 2] JP-A No. 2009-108314
[Patent Document 3] International Publication WO2013/176031
[Patent Document 4] International Publication WO2015/046526

The closest prior art documents JP 2010 260880 A and US 2015/086767 A1 relate to a double-sided adhesive tape which makes a foam base material a core, especially when narrow tape width and thin tape thickness are required for fixing of an electronic device.

JP 2012 167247 A discloses adhesive tapes having EVA core, very high Young's modulus, i.e. impact resistance and a shock absorption.

SUMMARY OF THE INVENTION

Technical Problem

The present invention has been made for solving the problems of conventional technologies as described above. That is, the present invention has an object of providing an adhesive tape excellent in various properties such as impact resistance, an antistatic property, shear deformation rate during heating, pressing force and the like.

Solution to Problem

The present inventors have intensively studied to attain the above-described object and resultantly found that it is very effective to use a base composed of a specific composition and showing specific physical properties, leading to completion of the present invention.

That is, the present invention is an adhesive tape as described in claim 1.

Advantageous Effects of Invention

Usually, the glass transition temperature (Tg) of polyethylene is about - 125°C. In contrast, Tg of an ethylene-vinyl acetate copolymer is considerably higher (for example, -42°C). The base of the adhesive tape of the present invention is a base harder than usual polyethylene-based bases since an ethylene-vinyl acetate copolymer is contained in larger amount in the base according to the present invention. Irrespective of use of a hard base, the adhesive tape of the present invention is excellent in impact resistance, and further, excellent also in various properties such as an antistatic property, shear deformation rate during heating, pressing force and the like, thus, suitable particularly for a narrow width adhesive tape. Hence, the inventive adhesive tape is useful for various applications in the field requiring such properties.

Brief Explanation of Drawings

Fig. 1 is a schematic view for illustrating the measurement method of bending moment in an example.
Fig. 2 is a schematic view for illustrating the evaluation method of narrow square frame anti-moisture heat load in an example.
Fig. 3 is a schematic view for illustrating the evaluation method of an antistatic property test in an example.
Fig. 4 is a schematic view for illustrating the evaluation method of shear deformation rate during heating in an example.
Fig. 5 is a schematic view for illustrating the evaluation method of narrow square frame low temperature impact resistance in an example.
Fig. 6 is a schematic view for illustrating the evaluation method of a pressing force test in an example.
Fig. 7 is a schematic view for illustrating the evaluation method of a Dupont impact resistance test in an example.

Modes for Carrying Out the Invention

<Base>

The based used in the present invention contains 30% by mass or more of an ethylene-vinyl acetate copolymer and the tensile modulus of the base is 30 N/mm$^2$ or more.

It is preferable that the base is composed of a polyolefin based resin composition containing an ethylene-vinyl acetate copolymer and another polyolefin based resin. The other polyolefin based resin includes, for example, polyethylene-based resins, polypropylene-based resins, or mixtures thereof. Particularly, liner low density polyethylene (LLDPE) and ethylene propylene rubber (EPDM) are more preferable.

The content of an ethylene-vinyl acetate copolymer in the base is 30 to 70% by mass, preferably 40 to 70% by mass, more preferably 50 to 70% by mass. The lower limits of these ranges are meaningful in terms of properties such as an antistatic property, shear deformation rate during heating, narrow square frame anti-moisture heat load, processability and the like. Meanwhile, the upper limits thereof are meaningful in terms of properties such as impact resistance, waterproof property and the like. An ethylene-vinyl acetate copolymer shows higher rubber elasticity as compared with linear low density polyethylene. Hence, when an ethylene-vinyl acetate copolymer is used in an amount in the above-described range in the base, if the base is for example a foam, it is possible to maintain rubber elasticity suitable for an application of a base of an adhesive tape even if the bubble diameter is decreased. As a result, the bubble diameter can be decreased, and the tensile modulus and the bending moment (bending stiffness) of the base become relatively higher, and further, an action of improving an antistatic property is believed to be performed.

The resin composition constituting the base can be produced by a known method. For example, it is obtained by irradiating a resin composition containing 30% by mass or more of an ethylene-vinyl acetate copolymer and another optional polyolefin based resin with electron beam to cross-link the resin composition. It may also be foamed simultaneously with this crosslinking or at another time.

The resin composition constituting the base may contain other additives in a range not deteriorating the effect of the present invention. Specific examples thereof include fillers, crosslinking agents, antioxidants, stabilizers and coupling agents. Further, a light blocking filler and a pigment may also be contained. Specific examples of the light blocking filler include carbon black, carbon nanutube and black inorganic fillers. Specific examples of the pigment include carbon black, aniline black, acetylene black and Ketjen black.

The width of the base is preferably 0.4 to 2.0 mm, more preferably 0.45 to 1.5 mm, particularly preferably 0.6 to 1.2 mm. The thickness of the base is preferably 0.05 mm to 1.0 mm, more preferably 0.05 to 0.4 mm.

The base is a foam, and its foaming magnification is 1.1 to 3.5-fold, preferably 1.5 to 3.0-fold. It is preferable that the bubble shape of a foam is spherical, since it is meaningful in terms of properties such as shear deformation rate during heating, narrow square frame anti-moisture heat load, impact resistance and the like. Further, it is preferable that the bubble of a foam is closed pore, since it is meaningful in terms of properties such as waterproof property, oleic acid resistance and the like.

The density of the base is preferably 300 kg/m$^3$ or more, more preferably 300 to 700 kg/m$^3$. The lower limits of these ranges are meaningful in terms of properties such as shear deformation rate during heating, narrow square frame anti-moisture heat load, processability and the like. Meanwhile, the upper limits thereof are meaningful in terms of properties such as waterproof property, impact resistance and the like.

The tensile modulus of the base measured according to JIS K7161 2014 is 30 N/mm$^2$ or more, preferably 32 N/mm$^2$ or more. Specific measurement methods of tensile modulus are described in the column of examples. According to knowledge of the present inventors, identification of the base by tensile modulus is very suitable as an index regarding an ultra narrow adhesive tape, differing from conventional general evaluation methods. The reason for this is that the problem of deformation of an ultra narrow adhesive tape by external force and heat is a problem utterly different from problems of usual adhesive tapes. For example, even an adhesive tape causing no problem at usual width becomes insufficient in narrow square frame processability, further, in any of various properties such as narrow square frame anti-moisture heat load, narrow square frame low temperature impact resistance, shear deformation rate during heating and the like, when the tape is processed into ultra narrow width. In contrast, the present inventors have found for the first time that if a base having specific tensile modulus according to the present invention is used, an adhesive tape sufficient in any of such properties is obtained. For example, when an adhesive tape is pulled to the longer direction, deformation of the tape in the thickness direction is not so problematic if it has usual width, while, deformation of an ultra narrow adhesive tape in the thickness direction imparts adverse effects on various properties in may cases. That is, good results in various properties shown by a base having tensile modulus in the specific range according to the present invention is guessed to be ascribable to correlation between the tensile modulus of the base and the deformation amount in the thickness direction or the like.

The bending moment (bending stiffness) in the MD direction and in the TD direction of the base measured according to JIS P8125 is preferably 5 gf/cm or more, more preferably 7 gf/cm or more. The specific measurement method of the bending moment is described in the column of examples. Also this bending moment is an index for avoiding the problem of deformation of an ultra narrow adhesive tape by external force and heat, like the case of tensile modulus explained above, and it is according to the knowledge of the present inventors. That is, the present inventors have found for the first time that if a base having specific bending moment is used, an adhesive tape having sufficient various properties is obtained. That is, good results in various properties shown by a base having bending moment in the specific range according to the present invention is guessed to be ascribable to correlation between the bending moment of the base and the deformation amount in the thickness direction or the like, like the case of tensile modulus.

A base having such high tensile modulus and high bending moment can be produced by a known method, or is commercially available in some cases. Particularly, when an ethylene-vinyl acetate copolymer is contained in larger amount, a base satisfying these properties is readily obtained. However, these properties are not determined only by the content of an ethylene-vinyl acetate copolymer. Various factors such as thickness, width, degree of cross-linking, foaming magnification, density, the tensile strength, elongation and the like of a base affect tensile modulus and the bending moment. Hence, a specific base satisfying these properties is obtained by designing the product in view of various factors comprehensively.

<Adhesive layer>

The adhesive layer used in the present invention is not particularly restricted. As the adhesive composition constituting an adhesive layer, for example, known various adhesive compositions such as acrylic compositions, rubber compositions, silicone compositions, urethane compositions and the like can be used. Of them, acrylic adhesive compositions are preferable from the standpoint of heat resistance, impact resistance, adhesive force and a waterproof property.

The constitutional component of an acrylic adhesive composition is not particularly restricted, and an acrylic copolymer (A) containing 10 to 20% by mass of an alkyl (meth)acrylate (A1) having an alkyl group having 1 to 3 carbon atoms, 50 to 80% by mass of an alkyl (meth)acrylate (A2) having an alkyl group having 4 to 12 carbon atoms, 10 to 15% by mass of a carboxyl group-containing monomer (A3), 0.01 to 0.5% by mass of a hydroxyl group-containing monomer (A4) and 1 to 5% by mass of vinyl acetate (A5) as constitutional components of the polymer chain is preferably used as the resin component. In this case, a cross-linked structure with an an acrylic copolymer (A) may be formed by blending a crosslinking agent which can react with a carboxyl group and/or a hydroxyl group of the acrylic copolymer (A). Further, for improving repulsion resistance, a silane coupling agent and an antioxidant may be blended.

The thickness of the adhesive layer is preferably 5 to 100 μm, more preferably 10 to 80 μm.

The adhesive layer can be formed, for example, by crosslinkingreacting an adhesive composition. An adhesive composition is applied on a base, and they can be crosslinking-reacted by heating to form an adhesive layer on the base. Further, it is also possible that an adhesive composition is applied on a release paper or the other film, the composition is crosslinking-reacted by heating to form an adhesive layer, and this adhesive layer is pasted to one side or both sides of the base. For application of an adhesive composition, for example, application apparatuses such as a roll coater, a die coater, a lip coater and the like can be used. In the case of heating after application, the solvent in an adhesive composition can also be removed simultaneously with the crosslinking reaction by heating.

<Adhesive tape>

The adhesive tape of the present invention has an adhesive layer on one side or both sides of a base. Though an adhesive layer may be formed on only one side of a base, it is preferable that an adhesive layer is formed on both sides to give a double-faced adhesive tape.

The withstanding voltage when electrostatic discharge (ESD) is imparted to an adhesive tape by a measurement method according to IEC61000-4-2, the antistatic property testing standard, is preferably 10 kV or more, more preferably 13 kV or more. Such an excellent antistatic property is believed to be expressed particularly when a base contains an ethylene-vinyl acetate copolymer in relatively large amount.

The 60° specular gloss on the surface of an adhesive layer measured by specular gloss measurement according to JIS Z8741 when an adhesive tape is heated at 120°C for 30 minutes is preferably 10 or more. The specular gloss is an index for evaluating surface roughness. When the 60° specular gloss on the surface of an adhesive layer after heating is high, that is, when the surface is smooth, a sufficient adhesion surface can be confirmed, leading to expression of excellent adhesion. Such 60° specular gloss after heating is influenced not only by the property of an adhesive layer but also by the kind and the property of a base. Particularly when the adhesive layer is thin, it is supposed that the influence of a base is also relatively large. Accordingly, the specific base used in the present invention is guessed to perform also an effect not to lower the 60° specular gloss on the surface of an adhesive tape after heating.

The shear deformation rate during heating of an adhesive tape is preferably 150% or less, more preferably 130% or less. When an adhesive tape has such shear deformation rate during heating, thermal deformation scarcely occurs, and excellent impact resistance, load bearing property and narrow square frame anti-moisture heat load are expressed. The specific measurement method of shear deformation rate during heating is described in the column of examples.

The pressing force of an adhesive tape is preferably 100 N/cm$^2$ or more, more preferably 150 N/cm$^2$ or more. When an adhesive tape has such pressing force, excellent impact resistance, load bearing property and narrow square frame anti-moisture heat load are expressed. The specific measurement method of pressing force is described in the column of examples.

EXAMPLES

The present invention will be illustrated further in detail by examples and comparative examples mentioned below. In the following descriptions, "part" is part by mass and "%" is % by mass.

<Production Examples 1 to 3 of adhesive layer>

Into a reaction apparatus equipped with a stirring machine, a thermometer, a reflux condenser and a nitrogen gas introducing tube were charged components (A1) to (A5) in amounts (%) shown in Table 1, ethyl acetate, n-dodecanethiol as the chain transfer agent, and 0.1 part of lauryl peroxide as the peroxide type radical polymerization initiator. The reaction apparatus was filled with a nitrogen gas, and they were polymerized at 68°C for 3 hours, then, at 78°C for 3 hours under a nitrogen gas flow while stirring. Next, the reaction mixture was cooled down to room temperature, and ethyl acetate was added. By this operation, an acrylic copolymer (A) having a solid concentration of 30% was obtained.

The weight-average molecular weight (Mw) and the theoretical Tg of each acrylic copolymer are shown in Table 1. This weight-average molecular weight (Mw) is the standard polystyrene-equivalent molecular weight of the acrylic copolymer measured by a GPC method using the following measurement apparatus and conditions.

- apparatus: LC-2000 series (manufactured by JASCO Corporation)
- column: Shodex KF-806Mx2, Shodex KF-802x1
- eluent: tetrahydrofuran (THF)
- flow rate: 1.0 mL/min
- column temperature: 40°C
- injection amount: 100 $\mu$L
- detector: refractive index meter (RI)
- measurement sample: An acrylic polymer was dissolved in THF to prepare a solution having an acrylic polymer concentration of 0.5% by mass, and extraneous materials were removed by filtration through a filter.

Theoretical Tg was calculated by the FOX formula.

Table 1

| No. | Acrylic copolymer (A) in adhesive | | | | | Theoretical Tg [°C] | Mw [ten thousand] |
|---|---|---|---|---|---|---|---|
| | A1 | A2 | A3 | A4 | A5 | | |
| Pro. Ex. 1 | MA/13 | 2-EHA/70, BA/4.9 | AA/10 | 4-HBA/0.1 | Vac/2 | -62.3 | 130 |
| Pro. Ex. 2 | MA/15 | 2-EHA/68, BA/4.9 | AA/10 | 4-HBA/0.1 | Vac/2 | -60.7 | 127 |
| Pro. Ex. 3 | MA/20 | 2-EHA/65, BA/2.9 | AA/10 | 4-HBA/0.1 | Vac/2 | -57.3 | 128 |

Abbreviations in Table 1 are as described below.

"MA": methyl acrylate

"2-EHA": 2-ethylhexyl acrylate

"BA": n-butyl acrylate

"AA": acrylic acid

"4-HBA": 4-hydroxybutyl acrylate

"Vac": vinyl acetate

To 100 parts of the solid component of each acrylic copolymer (A) were added 0.04 parts by mass of an isocyanate type crosslinking agent (CORONATE (registered trademark) L-45E, 45% solution) manufactured by Nippon Polyurethane Industry Co., Ltd. and 0.001 part of an epoxy type crosslinking agent (TEDRAD (registered trademark) -C) manufactured by Mitsubishi Gas Chemical Company, Inc., 0.1 part of a silane coupling agent (trade name: KBM-403) manufactured by Shin-Etsu Chemical Co., Ltd. as the silane coupling agent (C), and 0.2 parts of an antioxidant (IRGANOX (registered trademark) 1010) manufactured by BASF as the antioxidant (D) and they were mixed, to prepare an adhesive composition. Further, this adhesive composition was applied on a silicone-treated release paper so that the thickness after drying was 0.05 mm. Then, the solvent was removed and the mixture was dried and allowed to crosslinking-reacted at 110°C, to form adhesive layers 1 to 3.

<Example 1>

First, a base (thickness = 0.15 mm, tensile modulus = 46.1 N/mm$^2$, bending moment = 15 gf/cm, foaming magnification = 1.9, density = 544 kg/m$^3$) composed of a polyethylene (PE)-based foam containing 60% of an ethylene-vinyl acetate copolymer (EVA) was prepared. Both sides of this base were treated by corona discharge, and the adhesive layer on the release paper obtained in Production Example 1 was pasted to both sides of the base, and they were cured at 40°C for 3 days, to obtain a double-faced adhesive tape.

<Examples 2 and 3>

A double-faced adhesive tape was obtained in the same manner as in Example 1 except that the adhesive layers obtained in Production Examples 2 and 3 were used as the adhesive layer.

<Example 4>

A double-faced adhesive tape was obtained in the same manner as in Example 1 except that a base (thickness = 0.15 mm, tensile modulus = 46.2 N/mm$^2$, bending moment = 18 gf/cm, foaming magnification = 1.7, density = 590 kg/m$^3$) composed of a PE-based foam containing 70% of EVA was used as the base.

<Example 5>

A double-faced adhesive tape was obtained in the same manner as in Example 1 except that a base (thickness = 0.2 mm, tensile modulus = 36.6 N/mm$^2$, bending moment = 18 gf/cm, foaming magnification = 2.9, density = 356 kg/m$^3$) composed of a PE-based foam containing 70% of EVA was used as the base.

<Comparative Example 1>

A double-faced adhesive tape was obtained in the same manner as in Example 1 except that a PE-based foam (manufactured by Sekisui Chemical Co., Ltd., trade name: Volara XL-HT#030012, thickness = 0.2 mm, tensile modulus = 21.0 N/mm$^2$, bending moment = 3 gf/cm, foaming magnification = 3, density = 330 kg/m$^3$) was used as the base.

<Comparative Example 2>

A double-faced adhesive tape was obtained in the same manner as in Example 1 except that a PE-based foam (manufactured by Sekisui Chemical Co., Ltd., trade name: Volara XL-H#0180015, thickness = 0.15 mm, tensile modulus = 23.7 N/mm$^2$, bending moment = 7 gf/cm, foaming magnification = 1.8, density = 560 kg/m$^3$) was used as the base.
The tensile modulus of a base and the bending moment of a base and an adhesive tape in examples and comparative examples were measured by the following methods. The measurement values are shown Table 2.

(Tensile modulus)

A base was cut into a strip (long side is in MD direction) of width (W) 10 mm and length 70 mm, and this was used as a test piece. The thickness thereof was measured by 1/100 dial gauge (N = 5), and the average value of 5 points was adopted as the thickness (t), and the cross-sectional area (S) of the test piece was determined by the following formula.

$$\text{cross-sectional area } S \text{ (mm}^2) = t \times W$$

t: thickness (mm)
W: width (mm)

According to JIS K7161 2014, the chuck distance (L) of a commercially available tensile tester (manufactured by Toyo Seiki Seisaku-sho, Ltd., apparatus name: Strograph V-10C, full scale 50N) was set at 20 mm, and the upper end and the lower end of the test piece were chucked. Thereafter, the test piece was pulled at a tensile rate of 10 mm/min, and a tensile loaddisplacement curve was obtained. A linear formula was determined from tensile loads when the displacement of the resultant tensile loaddisplacement curve was 0.05 mm and 0.25 mm. From the resultant linear formula, the displacement x (mm) when the tensile load F = 10 N was determined, and tensile modulus acting as an index for toughness of the base was determined by the following formula.

$$\text{tensile modulus (N/mm}^2) = (F/S)/(x/L)$$

F: tensile load = 10 (N)

S: cross-sectional area (mm$^2$)

x: tensile load = displacement (mm) under 10 N

L: chuck distance = 20 (mm)

Respective linear formulae and tensile moduluses as described below.

Examples 1, 2 and 3: linear formula y = 3.6667x+0.0767, tensile modulus 46.1 N/mm$^2$
Example 4: linear formula y = 3.619x+0.0590, tensile modulus 46.2 N/mm$^2$
Example 5: linear formula y = 3.639x+0.0689, tensile modulus 36.6 N/mm$^2$
Comparative Example 1: linear formula y = 1.2632x-0.0432, tensile modulus 21.0 N/mm$^2$
Comparative Example 2: linear formula y = 2.1026x+0.1349, tensile modulus 23.7 N/mm$^2$

(Bending moment)

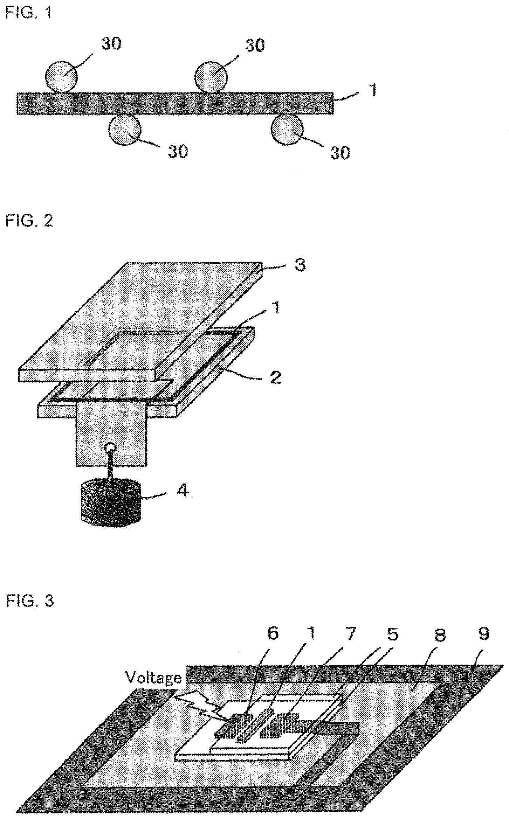

A base (or double-faced adhesive tape 1) was cut into a strip of width 38 mm and length 50 mm, and this was used as a test piece. The resultant test piece was sandwiched by 4 terminals 30 as shown in Fig. 1. According to JIS P8125, the test piece was mounted on a part operating in the test of a commercially available taber stiffness tester (manufactured by Toyo Seiki Seisaku-sho, Ltd.), and upper and lower 10 g weights were attached to a pendulum, and a scale at a bending rate of 3°/sec and a bending angle of 15° was read, and this was adopted as the measurement value. This measurement value was substituted into the following calculation formula, and the bending moment (M) in the DM direction and in the TD direction was calculated.

$$\text{Bending moment (gf/cm)} = 38.0 \text{ nk/w}$$

n: scale reading (1 in the case of 10 g weight)

k: moment per division (gf/cm)

w: width of test piece

Table 2

| | Adhesive layer | Base | | | | Adhesive tape |
|---|---|---|---|---|---|---|
| | Pro. Ex. No. | Material | Thickness (mm) | Tensile modulus (N/mm$^2$) | Bending moment (gf/cm) | Bending moment (gf/cm) |
| Ex. 1 | 1 | PE-based foam containing 60% of EVA | 0.15 | 46.1 | MD=14 TD=15 | MD=16 TD=17 |
| Ex. 2 | 2 | PE-based foam containing 60% of EVA | 0.15 | 46.1 | MD=14 TD=15 | MD=16 TD=17 |
| Ex. 3 | 3 | PE-based foam containing 60% of EVA | 0.15 | 46.1 | MD=14 TD=15 | MD=16 TD=17 |
| Ex. 4 | 1 | PE-based foam containing 70% of EVA | 0.15 | 46.2 | MD=17 TD=18 | MD=19 TD=20 |
| Ex. 5 | 1 | PE-based foam containing 70% of EVA | 0.2 | 36.6 | MD=19 TD=20 | MD=20 TD=21 |
| Comp. Ex. 1 | 1 | PE-based foam | 0.2 | 21.0 | MD=3 TD=4 | MD=3 TD=4 |
| Comp. Ex. 2 | 1 | PE-based foam | 0.15 | 23.7 | MD=7 TD=8 | MD=7 TD=8 |

<Evaluation test>

The double-faced adhesive tapes obtained in examples and comparative examples were evaluated by the following methods. The results are shown in Tables 3 to 6.

(Narrow square frame anti-moisture heat load)

A double-faced adhesive tape 1 was cut into a frame of 63 mm×118 mm with a width of 0.5 mm, 0.6 mm, 0.8 mm or 1.0 mm, and one release paper was peeled. As shown in Fig. 2, the double-faced adhesive tape 1 was pasted to a 1.5 mm thick polycarbonate hook 2, then, another release paper was peeled and pasted to a 2.0 mm thick glass plate 3, and these were cured under an atmosphere of 23°C and 50% RH for 60 minutes. 200 gf weight 4 was hung on the hook 2, and kept under an atmosphere of 40°C and 90% RH for 24 hours, and the load bearing property was evaluated by the following standard.

"○": The hook 2 did not fall for 24 hours
"×": The hook 2 fell within 60 minutes.

(Antistatic property)

A double-faced adhesive tape 1 was cut into a strip of width 0.8 mm and length 80 mm, one release paper was peeled and pasted to a space between a HV electrode 6 and a copper electrode 7 (interelectrode distance: 1.0 mm) formed on an acrylic plate 5 of 2.0 mm thick×80 mm×120 mm, further, another release paper was peeled and an acrylic plate 5 of 2.0 mm thick×80 mm×80 mm was pasted. On this sample, pressurization treatment (0.5 MPa) at 23°C for 5 seconds was conducted using an autoclave. As shown in Fig. 3, the antistatic property of this sample was evaluated based on IEC61000-4-2 (antistatic property standard). Specifically, voltage was applied 50 times at each voltage to a HV electrode 15 using a static electricity gun, and the applied voltage (ESD withstanding voltage) when current flowed to the side of the copper electrode 7 was measured. This sample was placed on a stainless table 9 via an insulation sheet 8, and the copper electrode 7 is grounded to a stainless table 18.

(60° Specular gloss)

Based on JIS Z8741, a double-faced adhesive tape was cut into 100 mm×100 mm, a release paper was peeled, and the end face of the tape was fixed and hung with a clip in a hot air dryer under an atmosphere of 120°C. It was left for 30 minutes and taken out, then, the 60° specular gloss of the adhesive layer was measured by a handy gloss meter (manufactured by Nippon Denshoku Industries Co., Ltd., apparatus name: PG-2M).

(Shear deformation rate during heating)

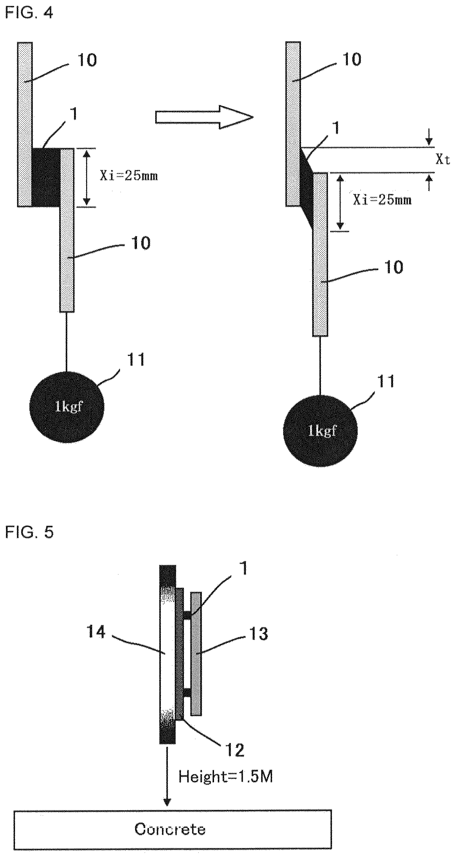

A double-faced adhesive tape 1 was cut into 25 mm×25 mm, and one release paper was peeled. As shown in Fig. 4, the double-faced adhesive tape 1 was pasted to an SUS304BA plate 10 of thickness 0.5 mm, width 30 mm and length 100 mm, then, another release paper was peeled, and pasted to an SUS304BA plate 10 of the same size, and cured under an atmosphere of 23°C and 50% RH for 60 minutes. Then, 1 kgf weight 11 was hung on the lower end, and heated at 120°C for 30 minutes and at 135°C for 30 minutes, and its deformation amount was visually measured by a loupe, and the shear deformation rate during heating ($\triangle$Sr) was calculated by the following formula.

$$\triangle Sr = (Xi+Xt)/Xi \times 100$$

$\triangle$Sr: shear deformation rate during heating (%)

Xi: charged sample length (mm) = 25 (mm)
Xt: sample deformation amount (mm)

(Narrow square frame low temperature impact resistance)

A double-faced adhesive tape 1 was cut into a frame of 63 mm×118 mm with width 0.6 mm, and one release paper was peeled, and pasted to a 1.5 mm thick polycarbonate plate 12, further, another release paper was peeled, and pasted to a 1.9 mm thick reinforced glass plate 13. This pasted member was adjusted with a 2.0 mm thick SUS304 plate 14 so that the weight was 160 gf as shown in Fig. 5, then, cured for 60 minutes. This sample was allowed to fall freely in the shearing direction from a height of 1.5 M onto concrete under an atmosphere of -20°C, and the impact resistance was evaluated by the following standard.

"○": After falling 20 times, peeling of an adhesion portion and interlaminar fracture of a base are not observed.
" × After falling 20 times, peeling of an adhesion portion and interlaminar fracture of a base are observed.

(Pressing force)

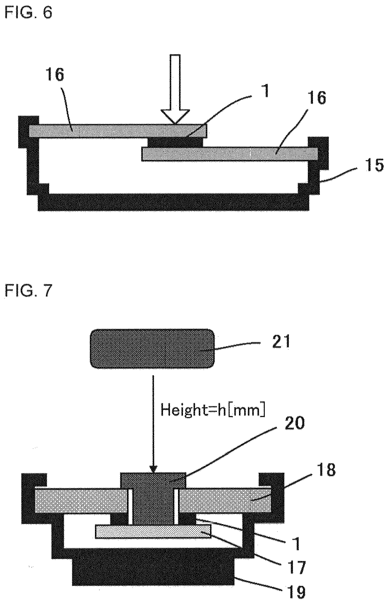

A double-faced adhesive tape 1 was cut into 25 mm×25 mm, and one release paper was peeled. As shown in Fig. 6, the double-faced adhesive tape 1 was pasted to a nylon resin plate 16 of length 100 mm, width 50 mm and thickness 2.0 mm fixed to a fixing jig 15, then, another release paper was peeled, and pasted to a nylon resin plate 16 of the same size, and cured under an atmosphere of 23°C and 50% RH for 24 hours. As shown in Fig. 6, it was pushed toward the lower direction at a rate of 50 mm/min, and the strength (N/cm$^2$) when the pasted portion was broken was measured.

(Dupont impact resistance test)

A double-faced adhesive tape 1 was cut into a frame of 45 mm×50 mm with width 1.0 mm, and one release paper was peeled, and pasted to a 1.9 mm thick reinforced glass plate 17. Then, another release paper was peeled, and pasted to a 4.0 mm thick polycarbonate plate 18 having a hole of 20 mmφ at the center. The pasted member was subjected to pressurization treatment (0.5 MPa) at 23°C for 5 seconds using an autoclave. Thereafter, it was cured under an atmosphere of 23°C for 24 hours, then, 300 gf weight 21 was allowed to fall three times from any height onto an SUS304 wedge 20 placed on a perforated portion of a polycarbonate plate 18 fixed to a fixing jig 19, using a Dupont impact resistance tester shown in Fig. 7, and the height when the reinforced glass plate 17 and the polycarbonate plate 18 were peeled was measured.

(Waterproof property)

A double-faced adhesive tape was cut into a frame of 63 mm×118 mm with width 0.6 mm, and one release paper peeled and pasted to a 2.0 mm thick glass plate, further, another release paper was peeled and a 2.0 mm thick glass plate was pasted. This sample was subjected to pressurization treatment (0.5 MPa) at 23°C for 5 seconds using an autoclave. This sample was submerged temporarily into water based on JIS IPX7 (waterproof standard), and the waterproof property was evaluated according to the following standard. A sample was fabricated in the same manner as described above, and submerged into water to a depth of 10 cm based on JIS IPX8 (waterproof standard) and subjected to pressurization treatment at 23°C and 0.5 MPa for 1 hour using an autoclave, and the waterproof property was evaluated according to the following standard.

"○": Water did not penetrated into the frame.
"× ": Water penetrated into the frame.

(Oleic acid resistance)

A double-faced adhesive tape was cut into a frame of 63 mm×118 mm with width 0.6 mm, and one release paper was peeled and pasted to a 2.0 mm thick glass plate, further, another release paper was peeled and a 2.0 mm thick glass plate was pasted. This sample was subjected to pressurization treatment at 23°C and 0.5 MPa for 5 seconds using an autoclave. This sample was immersed into oleic acid for 72 hours. The sample was taken out and allowed to stand still under an atmosphere of 85°C and 85% RH for 24 hours, and thereafter, left under a usual atmosphere for 24 hours. The sample was observed visually, and the oleic acid resistance was evaluated according to the following standard.

"○": Oleic acid did not penetrate into the frame.
" × Oleic acid penetrated into the frame.

(Processability)

A double-faced adhesive tape was cut into 10 pieces with a size of 5 mm×125 mm and this condition was maintained (namely, maintaining the condition of adjacent pieces when the adhesive tape was cut), and these were allowed to stand under an atmosphere of 65°C and 80% RH for 1 day. Thereafter, each one piece was peeled toward 180° direction together with the release paper, and conglutination to an adjacent part was confirmed visually, and the processability was evaluated according to the following standard.

"○": Conglutination to an adjacent part was scarcely observed, and the piece could be peeled without peeling the adjacent part..
" × ": Remarkable conglutination was observed at an adjacent part, and the adjacent part was peeled simultaneously.

(Load bearing property)

A double-faced adhesive tape was cut into a size of 25 mm×25 mm, and one release paper was peeled. The double-faced adhesive tape was pasted to an SUS304 hook, then, another release paper was peeled, and pasted to an adherend. As this adherend, an SUS304 plate, a polycarbonate plate, an acrylic plate, an EGI steel plate, a Galvalume steel plate or a glass plate was used. A load of 700 gf was applied to the SUS304 hook, and the member was kept at 85°C for 24 hours, and the load bearing property was evaluated according to the following standard.

"○": The hook did not fall for 24 hours.
" ×": The hook fell within 60 minutes.

Table 3

| | Narrow square frame anti-moist heat load | | | | Antistatic property [kV] | 60° specular gloss |
|---|---|---|---|---|---|---|
| | 0.5 mm width | 0.6 mm width | 0.8 mm width | 1.0 mm width | | |
| Ex. 1 | ○ | ○ | ○ | ○ | 19 | 12.6 |
| Ex. 2 | ○ | ○ | ○ | ○ | 20 | 13.1 |

(continued)

| | Narrow square frame anti-moist heat load | | | | Antistatic property [kV] | 60° specular gloss |
|---|---|---|---|---|---|---|
| | 0.5 mm width | 0.6 mm width | 0.8 mm width | 1.0 mm width | | |
| Ex. 3 | ○ | ○ | ○ | ○ | 20 | 12.3 |
| Ex. 4 | ○ | ○ | ○ | ○ | 19 | 13.2 |
| Ex. 5 | ○ | ○ | ○ | ○ | 18 | 12.4 |
| Comp. Ex. 1 | × | × | × | × | 4 | 0.4 |
| Comp. Ex. 2 | × | × | ○ | ○ | 4 | 2.4 |

Table 4

| Sample | Shear deformation rate during heating | | Narrow square frame low temperature impact resistance | Pressing force [N/cm2] | Dupont impact resistance test |
|---|---|---|---|---|---|
| | 120 °C × 30 min | 135 °C × 30 min | | | |
| Ex. 1 | 120 | 140 | ○ | 240 | 225mm |
| Ex. 2 | 119 | 139 | ○ | 236 | 225mm |
| Ex. 3 | 120 | 139 | ○ | 239 | 225mm |
| Ex. 4 | 121 | 138 | ○ | 240 | 225mm |
| Ex. 5 | 120 | 140 | ○ | 238 | 200mm |
| Comp. Ex. 1 | 200 or more | 200 or more | × | 108 | 50 mm or less |
| Comp. Ex. 2 | 130 | 140 | ○ | 150 | 100mm |

Table 5

| Sample | Waterproof property | | Oleic acid resistance | Processability |
|---|---|---|---|---|
| | IPX-7 | IPX-8 | | |
| Ex. 1 | ○ | ○ | ○ | ○ |
| Ex. 2 | ○ | ○ | ○ | ○ |
| Ex. 3 | ○ | ○ | ○ | ○ |
| Ex. 4 | ○ | ○ | ○ | ○ |
| Ex. 5 | ○ | ○ | ○ | ○ |
| Comp. Ex. 1 | ○ | ○ | ○ | ○ |
| Comp. Ex. 2 | ○ | ○ | ○ | ○ |

Table 6

| Sample | Load bering property | | | | | |
|---|---|---|---|---|---|---|
| | SUS304 | Polycarbonate plate | Acrylic plate | EGI steel plate | Galvalume steel plate | Glass plate |
| Ex. 1 | ○ | ○ | ○ | ○ | ○ | ○ |
| Ex.2 | ○ | ○ | ○ | ○ | ○ | ○ |
| Ex. 3 | ○ | ○ | ○ | ○ | ○ | ○ |
| Ex. 4 | ○ | ○ | ○ | ○ | ○ | ○ |
| Ex. 5 | ○ | ○ | ○ | ○ | ○ | ○ |
| Comp. Ex. 1 | ○ | ○ | ○ | ○ | ○ | ○ |
| Comp. Ex. 2 | ○ | ○ | ○ | ○ | ○ | ○ |

<Evaluation>

As apparent from the evaluation results in Tables 3 to 6, the adhesive tapes of Examples 1 to 5 were excellent in all properties.

In Comparative Example 1, a commercially available polyolefin based foam base not containing or containing only a small amount of an ethylene-vinyl acetate copolymer and having low tensile modulus and low bending moment was used. This adhesive tape of Comparative Example 1 was inferior in narrow square frame low temperature impact resistance, an antistatic property, shear deformation rate during heating, narrow square frame anti-moisture heat load, pressing force and Dupont impact resistance.

In Comparative Example 2, a commercially available polyolefin based foam base not containing or containing only a small amount of an ethylene-vinyl acetate copolymer and having low tensile modulus was used. This adhesive tape of Comparative Example 2 was inferior in narrow square frame low temperature impact resistance, an antistatic property, pressing force and Dupont impact resistance in the case of an ultra narrow tape.

Industrial Applicability

The adhesive tape of the present invention is excellent in impact resistance, irrespective of use of a hard base containing an ethylene-vinyl acetate copolymer in large amount, and further, is excellent also in various properties such as shear deformation rate during heating, narrow square frame anti-moisture heat load, an antistatic property, processability, waterproof property, oleic acid resistance and the like. Hence, the adhesive tape can be utilized in various applications in the field requiring such properties. Particularly, the adhesive tape can be suitably used in applications of electronic devices such as smartphones, tablet terminals and the like. Specifically, the adhesive tape can be used for fixation of a housing and a top panel, fixation of an in-car LCD, module and a housing, and the like.

Explanation of numerals

1: double-faced adhesive tape
2: 1.5 mm thick polycarbonate hook
3: 2.0 mm thick glass plate
4: 200 gf weight
5: acrylic plate
6: HV electrode
7: copper electrode
8: insulation sheet
9: stainless table
10: 0.5 mm thick SUS304BA plate
11: 1 kgf weight
12: 1.5 mm thick polycarbonate plate

13: 1.9 mm thick reinforced glass plate

14: 2.0 mm thick SUS304 plate

15: fixing jig

16: 2.0 mm thick nylon resin plate

17: 1.9 mm thick reinforced glass plate

18: 4.0 mm thick polycarbonate plate

19: fixing jig

20: SUS304 wedge

21: 300 gf weight

30: terminal

**Claims**

1.  An adhesive tape having an adhesive layer on one side or both sides of a base, wherein

    the base is a foam and its foaming magnification is 1.1 to 3.5-fold which is composed of a polyolefin based resin composition containing an ethylene-vinyl acetate copolymer and another polyolefin based resin,
    the base contains 30 to 70% by mass of the ethylene-vinyl acetate copolymer, and
    the tensile modulus of the base measured according to JIS K7161 2014 is 30 N/mm$^2$ or more.

2.  The adhesive tape according to Claim 1, wherein the width of the base is 0.4 to 2.0 mm.

3.  The adhesive tape according to Claim 1, wherein the thickness of the base is 0.05 mm to 1.0 mm.

4.  The adhesive tape according to Claim 1, wherein the density of the base is 300 kg/m$^3$ or more.

5.  The adhesive tape according to Claim 1, wherein the bending moment (bending stiffness) in the MD direction and in the TD direction of the base measured according to JIS P8125 is 5 gf/cm or more.

6.  The adhesive tape according to Claim 1, wherein the withstanding voltage when electrostatic discharge is imparted to the adhesive tape by a measurement method according to IEC61000-4-2, the antistatic property testing standard, is 10 kV or more.

7.  The adhesive tape according to Claim 1, wherein the 60° specular gloss on the surface of the adhesive layer measured by specular gloss measurement according to JIS Z8741 when the adhesive tape is heated at 120°C for 30 minutes is 10 or more.

8.  The adhesive tape according to Claim 1, wherein the shear deformation rate during heating of the adhesive tape is 150% or less, measured as described herein.

9.  The adhesive tape according to Claim 1, wherein the pressing force of the adhesive tape is 100 N/cm$^2$ or more, measured as described herein.

10. Use of the adhesive tape according to claim 1 in applications of an electronic device.

**Patentansprüche**

1.  Klebeband mit einer Klebeschicht auf einer Seite oder beiden Seiten einer Basis, wobei

    die Basis ein Schaum ist und ihre schäumende Vergrößerung ein 1,1-bis 3,5-faches ist, der aus einer auf Polyolefin basierenden Harzzusammen-setzung besteht, die ein Ethylen-Vinylacetat-Copolymer und ein anderes auf Polyolefin basierendes Harz enthält,
    die Basis 30 bis 70 Massenprozent des Ethylen-Vinylacetat-Copolymers enthält, und
    der gemäß JIS K7161 2014 gemessene Elastizitätsmodul der Basis 30 N/mm$^2$ oder mehr ist.

2.  Klebeband nach Anspruch 1, wobei die Breite der Basis 0,4 bis 2,0 mm beträgt.

**3.** Klebeband nach Anspruch 1, wobei die Dicke der Basis 0,05 mm bis 1,0 mm beträgt.

**4.** Klebeband nach Anspruch 1, wobei die Dichte der Basis 300 kg/m$^3$ oder mehr beträgt.

**5.** Klebeband nach Anspruch 1, wobei das Biegemoment (die Biegesteifigkeit) in der MD-Richtung und in derTD-Richtung der Basis, gemessen gemäß JIS P8125, 5 gf/cm oder mehr beträgt.

**6.** Klebeband nach Anspruch 1, wobei die Spannungsfestigkeit, wenn durch ein Messverfahren gemäß IEC61000-4-2, dem Teststandard für antistatische Eigenschaften, eine elektrostatische Entladung zum Klebeband weitergegeben wird, 10 kV oder mehr beträgt.

**7.** Klebeband nach Anspruch 1, wobei der 60°-Spiegelglanz auf der Oberfläche der Klebeschicht, gemessen durch eine Spiegelglanzmessung gemäß JIS Z8741, wenn das Klebeband für 30 Minuten auf 120°C erhitzt wird, 10 oder mehr beträgt.

**8.** Klebeband nach Anspruch 1, wobei die Scherverformungsrate während eines Erhitzens des Klebebandes, gemessen wie es hierin beschrieben ist, 150% oder weniger beträgt.

**9.** Klebeband nach Anspruch 1, wobei Druckkraft des Klebebandes, gemessen wie es hierin beschrieben ist, 100 N/cm$^2$ oder mehr beträgt.

**10.** Verwendung des Klebebands nach Anspruch 1 bei Anwendungen einer elektronischen Vorrichtung.

**Revendications**

**1.** Ruban adhésif ayant une couche adhésive sur un côté ou sur les deux côtés d'une base,

la base étant une mousse et le grossissement de mousse est de 1,1 à 3,5 fois, base qui est constituée d'une composition de résine à base de polyoléfine contenant un copolymère d'éthylène acétate de vinyle et une autre résine à base de polyoléfine,
la base contenant 30 à 70% en masse du copolymère d'éthylène acétate de vinyle, et
le module d'élasticité en traction de la base, mesuré selon la norme JIS K7161 2014 étant de 30 N/mm$^2$ ou plus.

**2.** Ruban adhésif selon la revendication 1, dont la largeur de la base est de 0,4 à 2,0 mm.

**3.** Ruban adhésif selon la revendication 1, dont l'épaisseur de la base est de 0,05 mm à 1,0 mm.

**4.** Ruban adhésif selon la revendication 1, dont la densité de la base est de 300 kg/m$^3$ ou plus.

**5.** Ruban adhésif selon la revendication 1, dont le moment de flexion (rigidité à la flexion) dans la direction MD et dans la direction TD de la base, mesuré selon la norme JIS P8125, est de 5 gf/cm ou plus.

**6.** Ruban adhésif selon la revendication 1, dont la tension de résistance lors de l'application d'une décharge électrostatique au ruban adhésif par une méthode de mesurage selon la norme IEC61000-4-2, à savoir, la norme d'essai de la propriété antistatique, est de 10 kV ou plus.

**7.** Ruban adhésif selon la revendication 1, dont le brillant spéculaire à 60° sur la surface de la couche adhésive, brillant spéculaire mesuré selon la norme JIS Z8741 lorsque le ruban adhésif est chauffé à 120°C pendant 30 minutes, est de 10 ou plus.

**8.** Ruban adhésif selon la revendication 1, dont le taux de déformation en cisaillement pendant le chauffage du ruban adhésif, mesuré tel que décrit ici, est de 150% ou moins.

**9.** Ruban adhésif selon la revendication 1, dont la force de pression du ruban adhésif, mesuré tel que décrit ici, est de 100 N/cm$^2$ ou plus.

**10.** Utilisation du ruban adhésif selon la revendication 1 dans des applications d'un dispositif électronique.

FIG. 1

FIG. 2

FIG. 3

FIG. 4

FIG. 5

FIG. 6

FIG. 7

Height=h[mm]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015063703 A
- JP 2009108314 A
- WO 2013176031 A
- WO 2015046526 A
- JP 2010260880 A
- US 2015086767 A1
- JP 2012167247 A